# EUROPÄISCHE PATENTSCHRIFT

(11) **EP 1 224 993 B1**
(45) Veröffentlichungstag und Bekanntmachung des Hinweises auf die Patenterteilung: **14.07.2004**
(21) Anmeldenummer: 02001527.7
(22) Anmeldetag: 10.04.1995
(51) Int. Cl.: B23B 31/12

(54) **Bohrfutter**
Drill chuck
Mandrin de forage

(30) Priorität: 31.10.1994 DE 4438991
(43) Veröffentlichungstag der Anmeldung: 24.07.2002
(62) Teilanmeldung aus: 00113207.5
(73) Patentinhaber: Röhm, Günter Horst, D-89567 Sontheim (DE)
(72) Erfinder: Röhm, Günter Horst, D-89567 Sontheim (DE)
(74) Vertreter: Hentrich, Swen Dipl.-Phys. Dr.

(56) Entgegenhaltungen:
- EP-A- 0 598 176
- US-A- 3 970 323
- US-A- 4 302 021

## Beschreibung

Die Erfindung betrifft ein Bohrfutter, mit den Merkmalen gemäß dem Oberbegriff des Anspruches 1. Ein Bohrfutter dieser Art ist z.B. aus US-A-4 302 021 bekannt. Weiterhin sind Bohrfutter für von Hand spannbare Bohrfutter aus DE 43 13 742 C1 bekannt. Selbstspannende Futter mit analogem Aufbau sind in DE 23 41 642 A1 beschrieben.

Im Fall nur von Hand spannbarer Bohrfutter sind die Spannbacken im Futterkörper geführt und stehen über eine Backenverzahnung mit einem Spanngewinde am Spannring im Eingriff. Bei selbstspannenden Bohrfuttern sind dagegen die Spannbacken am Spannring geführt und axial an einem in Richtung um die Futterachse mit den Spannbacken drehschlüssigen Spannkopf gehalten, der in einem im Futterkörper vorgesehenen Spanngewinde verdrehbar ist. In beiden Fällen begrenzen die Anschläge die Verdrehbarkeit des Stellrings gegenüber dem Futterkörper und die Sperreinrichtung ist zwischen dem Spannring und einem Schleppring wirksam, wobei sich der Kranz der Sperrausnehmungen am Spannring und das Sperrglied am Schleppring befinden, der unter der Kraft einer Nachstellfeder steht und dessen Verdrehung relativ zum Futterkörper auf einen für die Nachstellung der Spannbacken zugelassenen Drehweg begrenzt ist. Die Rasteinrichtung ist ebenfalls zwischen dem Stellring und dem Schleppring ausgebildet. Sie dient dazu, bei offenem Bohrfutter die gegenseitige Drehmitnahme von Stellring und Schleppring zu sichern und bei geschlossenem Bohrfutter auszuschließen, daß sich im Bohrbetrieb der Stellring selbsttätig gegenüber dem Schleppring verstellt. Wird der Stellring relativ zum Schleppring in der dem Schließen des Bohrfutters entsprechenden Drehrichtung des Spannrings verdreht, verstellt sich das Sperrglied aus dem an den Sperrausnehmungen eingerückten Zustand in den ausgerückten Zustand, und umgekehrt.

Im Ergebnis bedarf ein solches Bohrfutter zum Spannen oder Lösen der Betätigung sowohl des Spannrings als auch des Stellrings, also der Handhabung mit zwei Händen.

Der Erfindung liegt die Aufgabe zugrunde, ein Bohrfutter der eingangs genannten Art auf möglichst einfache Weise so auszubilden, daß es zum Spannen und Lösen nur noch an einem einzigen Teil und damit nur noch mit einer einzigen Hand betätigt zu werden braucht, wobei die definierte Verstellung des Sperrgliedes über die gesamte Lebensdauer des Bohrfutters sicher gestellt sein soll.

Diese Aufgabe wird bei einem Bohrfutter mit den eingangs genannten Merkmalen nach der Erfindung durch die Merkmale aus dem kennzeichnenden Teil des Patentanspruches 1 gelöst.

Bei dem erfindungsgemäßen Bohrfutter dient der Stellring sowohl zur Verstellung des Sperrglieds als auch zur Verdrehung des Spannrings beim Verstellen der Spannbacken, wobei ersteres entlang dem Drehweg erfolgt, um den der Stellring gegenüber dem Spannring zwischen den Anschlägen verdrehbar ist.

Die Rasteinrichtung hat dabei den Zweck, sicher zu stellen, daß bei offenem Bohrfutter der Spannring vom Stellring beim Verdrehen mitgenommen wird, ohne daß das Sperrglied in den eingerückten Zustand verstellt wird, bzw. bei gespanntem Futter sich der Stellring gegenüber dem Spannring nicht so verdrehen kann, daß das Sperrglied in den ausgerückten Zustand übergeht. Die Betätigung des erfindungsgemäßen Bohrfutters ist allein durch den Stellring möglich, der nur verdreht zu werden und sogar nur noch allein für die Hand zugänglich zu sein braucht, um das Bohrfutter zu schließen, zu spannen und zu sperren, bzw. zu entsperren, zu lösen und zu öffnen, was die Handhabung im Vergleich zu den bekannten Bohrfuttern wesentlich vereinfacht, vor allem dann, wenn das Spannen und Lösen des Bohrfutters mit Hilfe des Bohrmaschinenantriebs über die Bohrspindel erfolgen soll und dabei nur eine Hand zum Halten des Stellrings frei ist. Die Verdrehung des Stellrings gegenüber dem Spannring ist durch die Anschläge begrenzt und die Verstellung des Sperrgliedes in die Sperrausnehmungen sichergestellt.

Die Sperrfeder und die Rastfeder sind gemeinsam von einem Federbügel gebildet, der sich in Umfangsrichtung längs des Spannrings erstreckt und drehschlüssig mit ihm verbunden ist. Durch die Ausbildung des Federbügels sowohl als Sperrfeder als auch als Rastfeder ergibt sich ein herstellungs- wie fertigungstechnisch sehr einfacher und vorteilhafter Aufbau des Bohrfutters. Der Federbügel weist eine auswärts gerichtete Vorspannung sowie zur Anlage an dem Futterkörper kommende und eine Bremswirkung ausübende Federstege auf. Die Federstege sind zur Dämpfung der beim Bohrbetrieb auftretenden Vibrationen am Futterkörper, Spannring und Stellring vorgesehen.

Als vorteilhaft zeigt es sich, wenn die Sperreinrichtung den koaxialen Kranz von Sperrausnehmungen aufweist, denen das eingerückte Sperrglied in einander derart geneigten Flankenflächen anliegt, daß diese den Spannring in der dem Öffnen des Bohrfutters entsprechenden Drehrichtung gegen Verdrehen sperren, beim Verdrehen des Spannrings in der entgegen gesetzten, also dem Schließen des Bohrfutters entsprechenden Drehrichtung aber das Sperrglied gegen die Kraft der Sperrfeder aus den Sperrausnehmungen herausdrücken und dadurch von Sperrausnehmung zu Sperrausnehmung verrutschen lassen. Weiterhin ist die Anordnung so getroffen, daß das Rastglied am Spannring und die Rastaufnahmen am Stellring vorgesehen sind.

Es ist möglich, daß der Spannring einen koaxialen Zwischenring aufweist, der die spannringseitigen Teile der Anschläge für den Stellring und den Federbügel trägt und ein Kragenteil aufweist, der den das Spanngewinde tragenden Teil des Spannrings drehfest umschließt. Dabei kann auf sehr einfache Weise die an sich bekannte, aus herstellungs- und montagetechnischen Gründen besonders vorteilhafte Möglichkeit verwirklicht werden, daß der das Spanngewinde tragende Teil des Spannrings aus zwei Ringhälften besteht, die durch den Kragenteil am Futterkörper zusammengehalten sind.

Eine andere Ausführungsmöglichkeit ist dadurch gegeben, das Anschlagstück als radial einwärts gerichteter Nocken an der Wandinnenseite des Stellrings ausgebildet ist. Es kann die Aussparung als Fenster in einem sich axial nach vorn etwa konisch verjüngenden Kragen des Zwischenrings ausgebildet sein.

Der Federbügel bildet den sich in Umfangsrichtung erstreckenden Federarm, der im eingerückten Zustand des Sperrglieds der Steuerkurve in einem Abstand vom Sperrglied anliegt, der das Durchfedern des Federarms an der Stelle des Sperrglieds um dessen Eingriffstiefe in die Sperrausnehmungen ermöglicht. Dann empfiehlt es sich, die Anordnung so zu treffen, daß am Federbügel zwei in Umfangsrichtung in gegenseitigem Abstand befindliche Vorsprünge vorgesehen sind, von denen der sperrgliedseitige Vorsprung die Anlage des Federarms an der Steuerkurve und der andere Vorsprung das Rastglied der Rasteinrichtung bildet.

Eine erste Möglichkeit zur Anordnung des Federbügels ist dadurch gekennzeichnet, daß der Federbügel in einem zwischen dem Spannring und dem Stellring in Umfangsrichtung verlaufenden Schlitz angeordnet und am Spannring formschlüssig gegen Verdrehen gesichert ist, daß die Ringwand des Spannrings mit einem Fenster für den Durchtritt des Sperrglieds in die Sperrausnehmungen versehen ist, und daß der Schlitz mindestens im Bereich des Rastglieds eine die Rastverstellungen des Rastglieds ermöglichende Erweiterung aufweist. Dabei besteht im einzelnen die Möglichkeit, daß der Federbügel mit zur Futterachse radialer Ausrichtung der Federbandfläche im Schlitz liegt und die Sperrausnehmungen radial an einer futterkörperseitigen, zur Futterachse senkrechten Ringfläche verlaufen. Handelt es sich insbesondere um einen Spannring mit Zwischenring, bildet die Wand des Zwischenrings vorzugsweise eine radial gerichtete Ringscheibe, die axial zwischen der die Sperrausnehmungen aufweisenden Ringfläche und einer radialen Ringschulter des Stellrings liegt, wobei sich zwischen der Ringscheibe und der Ringschulter der den Federbügel aufnehmende Schlitz befindet und die Steuerkurve sowie die Rastaufnahme an der Ringschulter, das Fenster für den Durchtritt des Sperrglieds und die Schlitzerweiterung für das Rastglied an der Ringscheibe ausgebildet sind. Zur Verdrehungssicherung des Federbügels kann zweckmäßigerweise der Zwischenring mit seinen Anschlagstücken den Federbügel in Öffnungen durchsetzen, deren Ränder in Umfangsrichtung den Anschlagstücken anliegen.

Eine andere vorteilhafte Möglichkeit für die Anordnung des Federbügels ist bei einem Spannring mit Zwischenring dadurch gekennzeichnet, daß der mit seiner Federbandfläche parallel zur Futterachse ausgerichtete Federbügel in einem in Umfangsrichtung zwischen dem Futterkörper und dem Zwischenring verlaufenden Ringschlitz liegt, der futterkörperseitig vom Kranz der axial verlaufenden Sperrausnehmungen begrenzt ist, und daß der Federbügel mit auswärts gerichteter Vorspannung dem Zwischenring anliegt und mit seinen beiden Vorsprüngen den Zwischenring in Fenstern auswärts durchgreift, in denen der Federbügel gegen Verdrehen festgehalten ist. Im einzelnen empfiehlt es sich, daß der Ringschlitz radial breiter als der Federbügel dick ist, daß der Federbügel mit einem etwa mittig zwischen den beiden Vorsprüngen befindlichen Scheitelbereich radial auswärts am Zwischenring abgestützt ist und zwischen diesem Scheitelbereich und den beiden Vorsprüngen je einen der Federstege zur tangentialen Anlage am Kranz der Sperrausnehmungen bildet. Zweckmäßigerweise trägt dabei der das Rastglied bildende Vorsprung an seiner dem Scheitelbereich des Federbügels abgewandten Seite einen dem Kranz der Sperrausnehmungen unter Vorspannung tangential anliegenden Federschenkel. Weiter empfiehlt es sich, daß der Federbügel im Scheitelbereich zwischen seinen beiden Vorsprüngen einen dritten, den Zwischenring in einem weiteren Fenster nach außen durchgreifenden Vorsprung aufweist, der in eine auf der Wandinnenseite des Stellrings vorgesehene Nut greift, die sich in Umfangsrichtung mindestens über den maximal möglichen Verdrehungsweg des Stellrings gegenüber dem Spannring erstreckt und mit mindestens einer ihrer Seitenwände eine axiale Anlage für den Vorsprung bildet, wodurch der Stellring gegen Axialverschiebung am Spannring gesichert ist. Dann liegen diese Sicherung, der Sperreingriff des Sperrglieds in die Sperrausnehmungen und der Rasteingriff des Rastglieds in die Rastaufnahmen sämtlich in derselben, zur Futterachse senkrechten Ebene, was eine völlig symmetrische, Kippmomente vermeidende Beanspruchung der beteiligten Teile ergibt. Diese Vorteile werden noch weiter durch die tangentiale Anlage der Federstege und des Federschenkels am Kranz der Sperrausnehmungen gefördert, die gemeinsam eine sehr präzise Ausrichtung des Federbügels am Spannring in Bezug auf den Kranz der Sperrausnehmungen einerseits und auf die Rastaufnahmen andererseits und damit sehr genaue Werte für die Federkräfte ergeben, mit denen der Federbügel das Sperrglied im Sperreingriff und das Rastglied im Rastsitzt hält.

Soweit es im übrigen um die Sicherung des Stellrings gegen axiales Verschieben geht, kann anstelle des mittleren Vorsprungs des Federbügels oder auch ergänzend zu ihm die Anordnung so getroffen werden, daß der Zwischenring an einer in Umfangsrichtung zwischen den Vorsprüngen und gegenüber dem Federbügel liegenden Stelle eine vom Federbügel unabhängige Federspange aufweist, die radial nach außen in eine auf der Wandinnenseite des Stellrings vorgesehene Nut greift, die sich in Umfangsrichtung mindestens über den maximal möglichen Verdrehungsweg des Stellrings gegenüber dem Spannring erstreckt und mit mindestens einer ihrer Seitenwände eine axiale Anlage für die Federspange bildet, durch welche der Stellring gegen Axialverschiebung am Spannring gesichert ist.

Im folgenden wird die Erfindung an in der Zeichnung dargestellten Ausführungsbeispielen näher erläutert; es zeigen:
- Fig. 1: ein Bohrfutter nach der Erfindung, links in einem Axialschnitt, rechts in einer Seitenansicht, jeweils in der Stellung der Spannbacken bei geringstem Spanndurchmesser und im ungesperrten Futterzustand,
- Fig. 2: den Schnitt II - II in Fig. 1,
- Fig. 3: den Schnitt III - III in Fig. 1,
- Fig. 4: den Schnitt IV - IV in Fig. 1, und zwar in der Teilfig. 4.1 im ungesperrten, in der Teilfig. 4.2 im gesperrten Futterzustand,
- Fig. 5: eine andere Ausführungsform des Bohrfutters nach der Erfindung in einer der Fig. 1 entsprechenden Darstellung,
- Fig. 6: den Schnitt VI - VI in Fig. 5,
- Fig. 7: den Schnitt VII - VII in Fig. 5,
- Fig. 8: das in Fig. 5 mit VIII bezeichnete Detail in vergrößerter Darstellung,
- Fig. 9: eine weitere Ausführungsform des erfindungsgemäßen Bohrfutters,
- Fig. 10: den Schnitt X - X in Fig. 9,
- Fig. 11: den Schnitt XI - XI in Fig. 9, und zwar in der Teilfig. 11.1 im ungesperrten, in der Teilfig. 11.2 im gesperrten Futterzustand,
- Fig. 12: eine weitere Ausführungsform des erfindungsgemäßen Bohrfutters in einer der Fig. 1 entsprechenden Darstellung,
- Fig. 13: den Schnitt XIII - XIII in Fig. 12, und zwar in den Teilfig. 13.1 im ungesperrten, in der Teilfig. 13.2 im gesperrten Futterzustand,
- Fig. 14: eine wiederum andere Ausführungsform des Bohrfutters nach der Erfindung in einer der Fig. 1 entsprechenden Darstellung,
- Fig. 15: den Schnitt XV - XV in Fig. 14,
- Fig. 16: den Schnitt XVI - XVI in Fig. 14 in einer Abwicklung in Umfangsrichtung, und zwar in der Teilfig. 16.1 im ungesperrten, in der Teilfig. 16.2 im gesperrten Futterzustand,
- Fig. 17: nur den Zwischenring des Bohrfutters nach Fig. 14 im Axialschnitt, und
- Fig. 18: eine Draufsicht auf den Zwischenring der Fig. 17.

Die in der Zeichnung dargestellten Bohrfutter dienen zur Aufnahme eines nicht dargestellten Bohrers und besitzen je ein Futterkörper 1 zum Anschluß an eine ebenfalls nicht dargestellte Bohrspindel. Zum Anschluß der Bohrspindel besitzt der Futterkörper eine Gewindeaufnahme 2. Die Bohrfutter besitzen den Bohrer zentrierende, axial führende und/oder einspannende Spannbacken 5, die in der zur Futterachse 3 koaxialen Werkzeugaufnahme 4 zentrisch zur Futterachse verstellbar sind. Zu dieser Verstellung dient ein Spannring 8, der am Futterkörper 1 axial unverschiebbar und drehbar geführt und axial nach hinten über ein Kugellager 22, gegebenenfalls über einen Druckring 21, am Futterkörper 1 abgestützt ist. Um unerwünschte Verstellungen der Spannbacken 5 zu verhindern, kann die Drehstellung des Spannrings 8 fixiert werden. Dazu dient eine allgemein mit 11 bezeichnete und zwischen dem Spannring 8 und dem Futterkörper 1 ausgebildete Sperreinrichtung, die aus einem koaxialen Kranz von Sperrausnehmungen 10 auf der Seite des Futterkörpers und auf der Seite des Spannrings 8 aus mindestens einem Sperrglied 12 besteht, das unter der Kraft einer Sperrfeder in die Sperrausnehmungen 10 greift. Dabei liegen das Sperrglied 12 und die es aufnehmenden Sperrausnehmungen 10 einander in derart geneigten Flankenflächen 13', 13" an, daß diese den Spannring 8 in der dem Öffnen des Bohrfutters entsprechenden Drehrichtung (Pfeil 14) gegen Verdrehen verriegeln, beim Verdrehen des Spannrings 8 von Hand mit einem dazu ausreichend großen Drehmoment in der entgegen gesetzten, also dem Schließen des Bohrfutters entsprechenden Drehrichtung (Pfeil 15) das Sperrglied 12 aber gegen die Federkraft aus den Sperrausnehmungen 10 herausdrücken und von Sperrausnehmung zu Sperrausnehmung entlang dem Umfang des Futterkörpres 1 verrutschen lassen. Unter den im Bohrbetrieb auftretenden Schwingungsbeanspruchungen des Bohrfutters bleibt das Futter aber auch in dieser dem Pfeil 15 entsprechenden Drehrichtung gesperrt. Die für dieses Sperrverhalten unterschiedliche Neigung der Flankenflächen 13', 13" wird auf einfache Weise durch eine sägezahnförmige Gestaltung erreicht, wobei die steilere Flankenfläche 13' der Zahnbrust und die flachere Flankenfläche 13" dem Zahnrücken entspricht. Das Sperrglied 12 kann zwischen seinen an den Sperrausnehmungen 10 ein- und ausgerückten Zuständen verstellt werden, wozu das Sperrglied 12 durch eine Steuerkurve 35 an einem koaxialen, ebenfalls axial unverschiebbaren Stellring 9 verstellbar und entsprechend der Stellring 9 relativ zum Spannring 8 verdrehbar ist. Diese Verdrehung des Stellrings 9 relativ zum Spannring 8 ist in beiden Drehrichtungen (Pfeile 14, 15) formschlüssig begrenzt, wozu Anschläge 16', 16" vorgesehen sind. Durch Verdrehen des Stellrings 9 in der dem Schließen des Bohrfutters entsprechenden Drehrichtung (Pfeil 15) verstellt sich das Sperrglied 12 aus dem ausgerückten Zustand in den eingerückten Zustand und umgekehrt, also durch Verdrehen des Stellrings 9 in der dem Öffnen des Bohrfutters entsprechenden Drehrichtung (Pfeil 14) aus dem eingerückten Zustand in den ausgerückten Zustand. Zwischen dem Stellring 9 und dem Spannring 8 ist eine allgemein mit 17 bezeichnete Rasteinrichtung vorgesehen, die in Umfangsrichtung zwei Raststellungen aufweist, wobei sich in der einen Raststellung das Sperrglied 12 in dem an den Sperrausnehmungen 10 eingerückten Zustand und in der anderen Raststellung im ausgerückten Zustand befindet, wie ein Vergleich der Figurenpaare 4.1, 4.2 bzw. 11.1, 11.2 bzw. 13.1, 13.2 oder 21.1, 21.2 erkennen läßt. Dabei sind die Raststellungen durch den Eingriff eines von der Kraft einer Rastfeder beaufschlagten Rastgliedes 38" auf der Seite des Spannrings 8 in entsprechend am Stellring 9 angeordnete Rastaufnahmen 17" gebildet. Die Sperrfeder und die Rastfeder sind gemeinsam von einem Federbügel 38 gebildet, der sich in Umfangsrichtung längs des Spannrings 8 erstreckt und drehfest mit dem Spannring 8 verbunden ist.

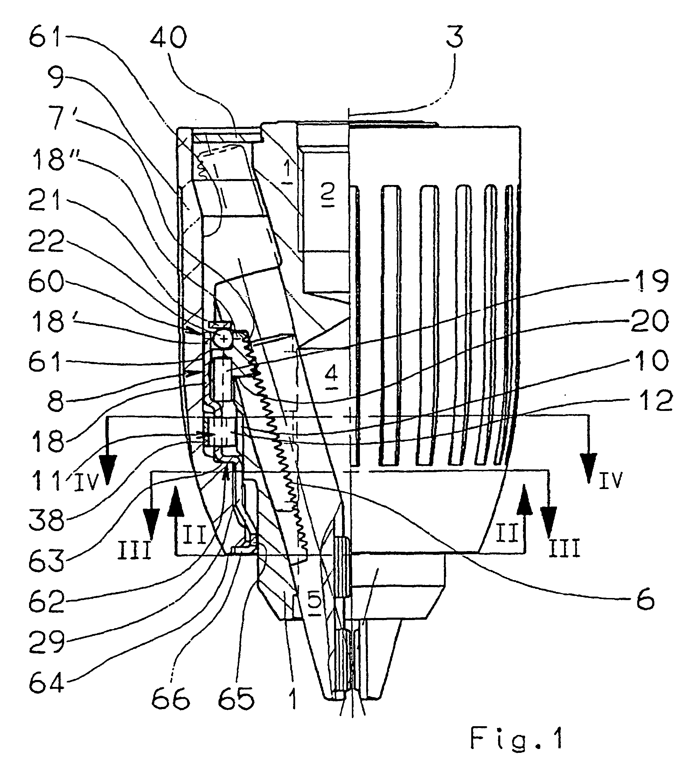

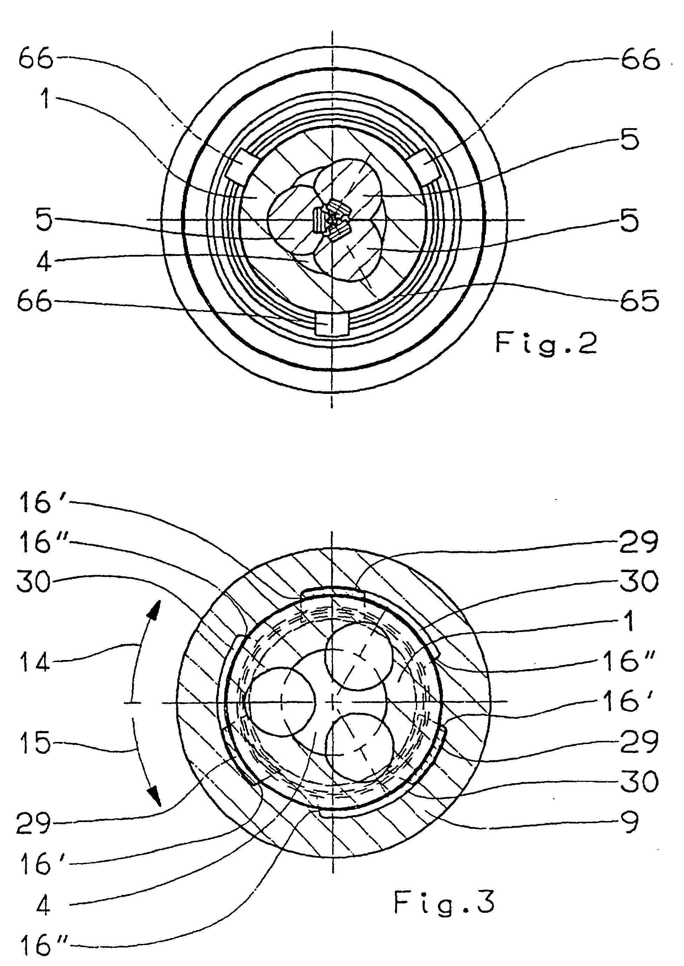

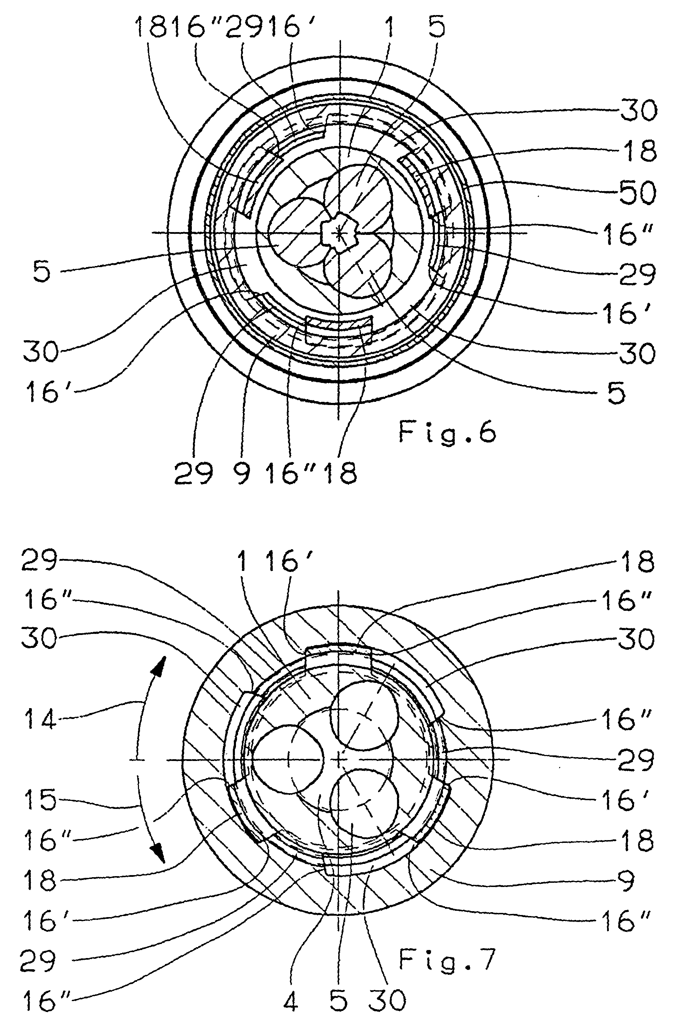

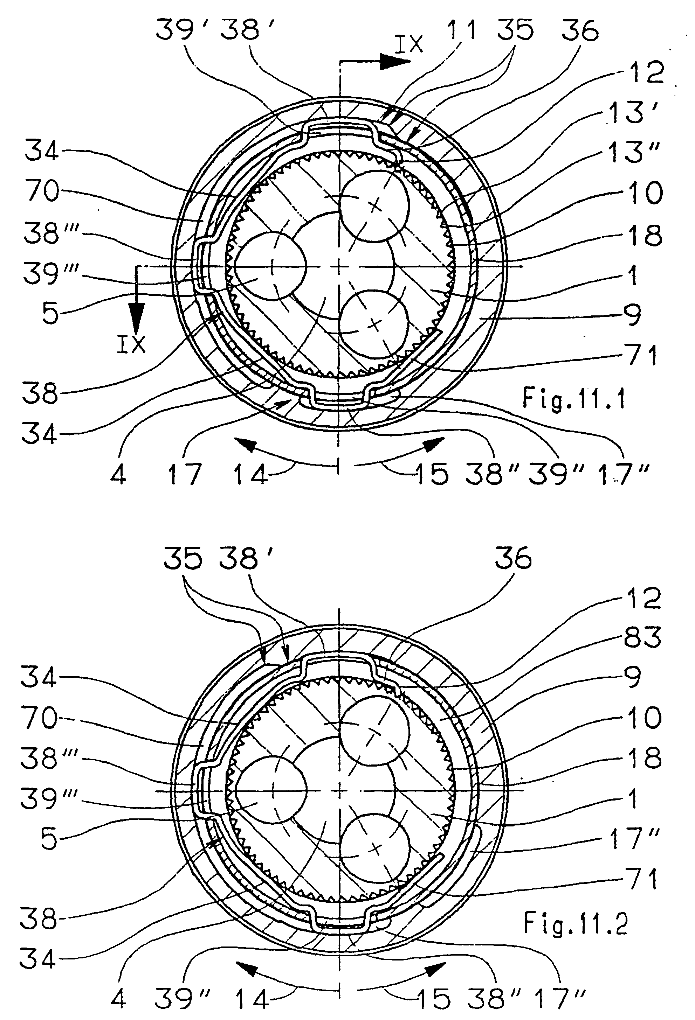

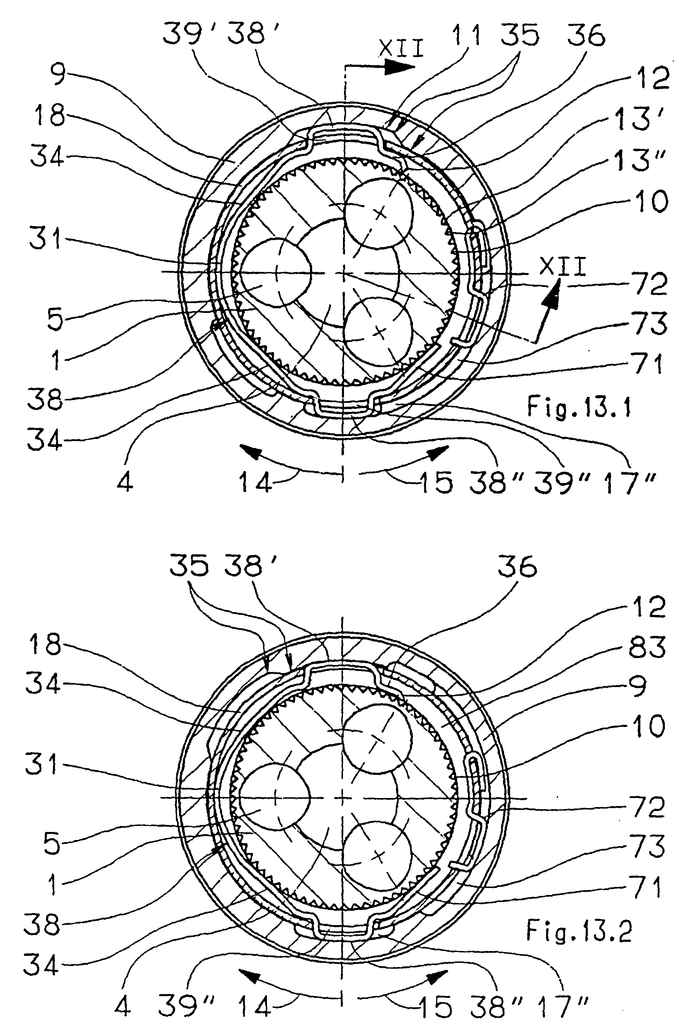

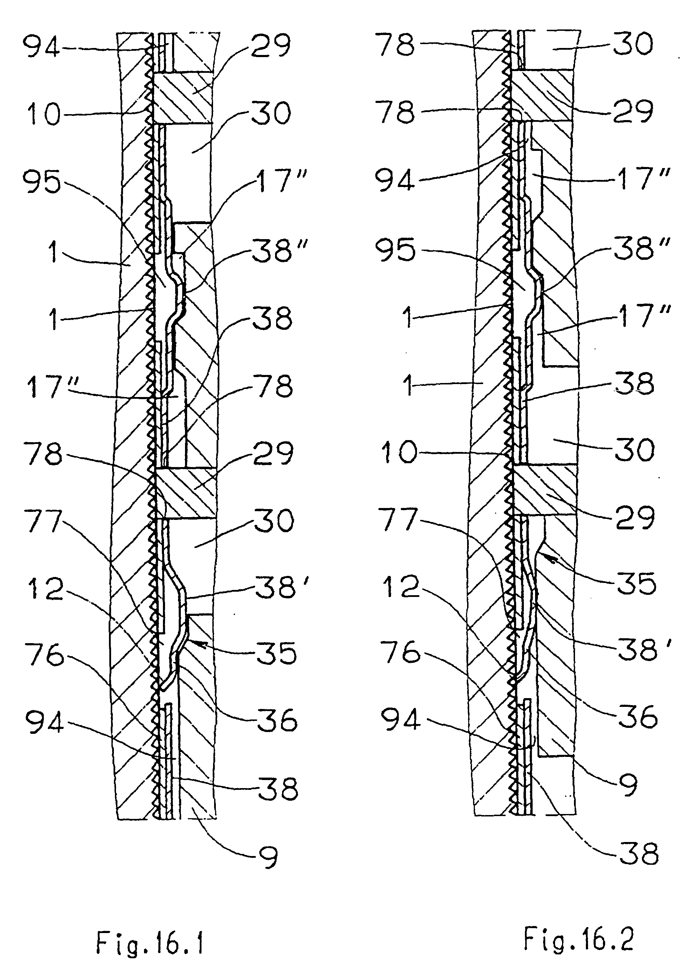

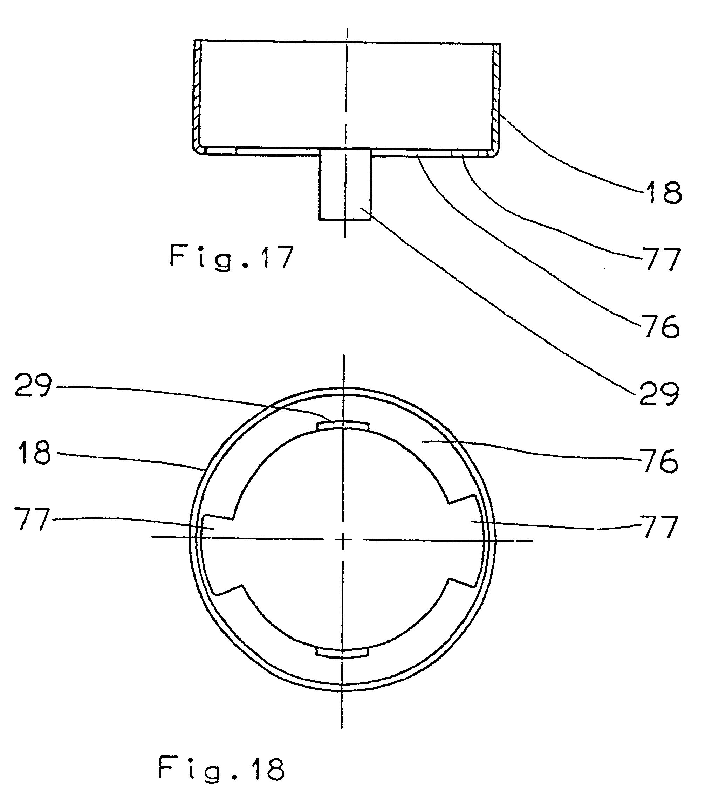

Die Ausführungsformen nach den Fig. 1 bis 18 zeigen von Hand spannbare Bohrfutter, bei welchen die Spannbacken 5 im Futterkörper 1 geführt und über eine Backenverzahnung 6 mit einem Spanngewinde 7' am Spannring 8 in Eingriff stehen.

Bei von Hand spannbaren Bohrfutter besitzt der Spannring 8 einen eine Führung für den Stellring 9 bildenden koaxialen Zwischenring 18, der die spannringseitigen Teile der Anschläge 16', 16" für den Stellring und der außerdem den Federbügel 38 trägt, sowie einen Kragenteil 18' umfaßt, der den das Spanngewinde 7' tragenden Teil des Spannrings 8 drehfest umschließt. Dabei besteht der das Spanngewinde 7' tragende Teil 18" des Spannrings 8 aus zwei umfangsmäßig geteilten, nämlich zunächst an jeder Teilung durch eine Bohrung 19 geschwächten und dann gebrochenen Ringhälften, die in einer Ringnut 20 des Futterkörpers 1 gegeneinander zusammengesetzt und durch den Kragenteil 18' am Futterkörper 1 zusammengehalten sind. Selbstverständlich kann aber der Spannring 8 auch einstückig ausgebildet sein, was jedoch in der Zeichnung nicht weiter dargestellt ist.

Der Spannring 8 bzw. Zwischenring 18 besitzt zur radialen Führung des Stellrings 9 eine kreiszylindrische Außenfläche 60, der die Spannhülse 9 mit einer entsprechend kreiszylindrischen Innenfläche 61 anliegt.

Im Ausführungsbeispiel nach den Fig. 1 bis 18 erstreckt sich diese kreiszylindrische Innenfläche 61 am Stellring 9 im gesamten axialen Bereich mit unverändertem Radius zwischen seinem rückwärtigen Ringende und dem Spannring 8. Daher kann der in axialer Richtung ungeteilt ausgebildete Stellring 9 axial von vorn her über den Futterkörper 1 auf den am Futterkörper fertig montierten Spannring 8 aufgeschoben werden, worauf der Stellring in seiner aufgeschobenen Endlage axial gesichert wird. Dazu kann der Zwischenring 18 eine kreisringförmige Außenschulter 62 aufweisen, welcher der Stellring 9 zur axialen Abstützung nach hinten mit einer entsprechend kreisringförmigen Innenschulter 63 anliegt. Die entsprechende Sicherung des Stellrings 9 gegen axiale Verschiebungen nach vorn kann entweder ebenfalls am Zwischenring 18, wie weiter unten noch näher beschrieben werden wird, oder im Bereich axial hinter dem Spannring 8 am Futterkörper 1, beispielsweise an einem mit dem Futterkörper 1 verbundenen Abschlußring 40 erfolgen, der auch zur radialen Führung des Stellrings 9 im Bereich seines rückwärtigen Ringendes beitragen kann.

Außer in den Ausführungsformen nach den Fig. 1 bis 4 ist axial vor dem Stellring 9 ein ihm gegenüber frei verdrehbarer Anschlagring 50 vorgesehen, der am Futterkörper 1 axial unverschiebbar und drehbar gelagert ist, wozu der Anschlagring 50 axial nach hinten an einer Ringschulter 51 des Futterkörpers 1 und axial nach vorn an einem Sprengring 52 gehalten ist, der in einer Ringnut am Futterkörper 1 sitzt. Der Anschlagring 50 schützt den Stellring 9 davor, beim Durchbohren einer Wand an die Wand anzustoßen und dadurch gebremst zu werden, was dazu führen könnte, daß das Bohrfutter sich so festzieht, daß es nur noch mit Mühe wieder geöffnet werden kann. Auch schützt der Anschlagring 50 den Stellring 9 gegen größere axiale Belastung von vorn, so daß die axiale Abstützung des Stellrings 9 nach hinten am Zwischenring 18 entsprechend gering beansprucht wird. Im übrigen schützt der Anschlagring 50 den häufig als reines Kunststoffteil ausgebildeten Spannring 9 vor den im vorderen Ringteil besonders hohen Verschleißbeanspruchungen.

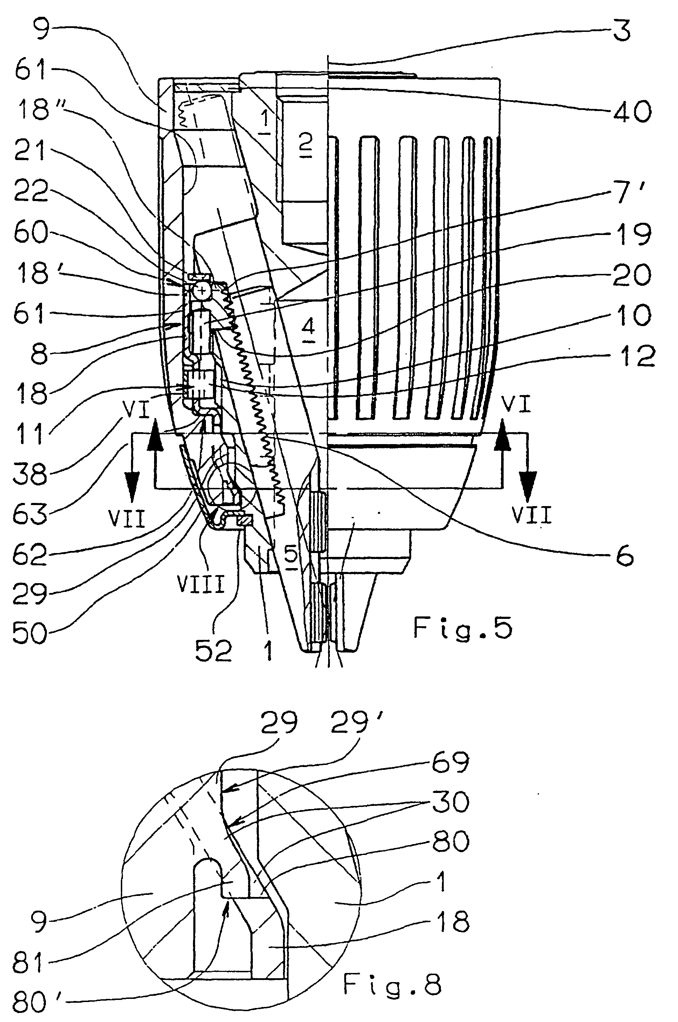

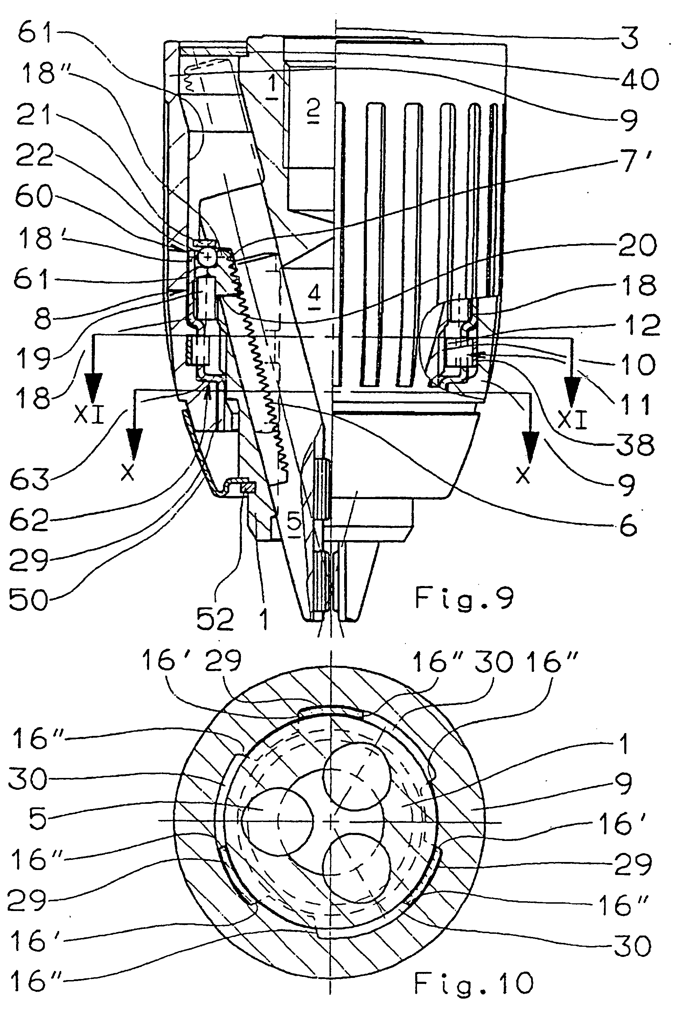

Für die Anschläge 16', 16" zur Drehbegrenzung zwischen dem Stellring 9 und dem Spannring 8 sind in den Ausführungsbeispielen der Fig. 1 bis 18 allgemein mit 29 bezeichnete Anschlagstücke am einen Ring 8 oder 9 und eine das Anschlagstück 29 aufnehmende Aussparung 30 am jeweils anderen Ring vorgesehen, wobei das Anschlagstück 29 an den Enden des Drehwegs jeweils mit einer der die Aussparung 30 in Umfangsrichtung begrenzenden beiden Stirnflächen 16', 16" zum Anschlag kommt. In den Ausführungsbeispielen sind jeweils drei solche gleichmäßig über den Futterumfang verteilt angeordnete Anschlagstücke 29 bzw.
Aussparungen 30 vorhanden. Im einzelnen können, wie in den Fig. 1 bis 4 oder 9 bis 18, die Anschlagstücke 29 als Wandstücke des Zwischenrings 18 ausgebildet sein, die vom vorderen Rand des Zwischenrings 18 axial nach vorn in die auf der Wandinnenseite des Stellrings 9 ausgebildeten Aussparungen 30 vorstehen. Die Anschlagstücke 29 können die Aussparungen 30 axial bis zum vorderen Rand 64 des Stellrings 9 durchgreifen und dort an ihrem vorderen Ende als axialer Anschlag für den Stellring ausgebildet sein, der den Stellring 9 gegen Verschieben axial nach vorn sichert. Dazu sind in den Fig. 1 bis 4 die Anschlagstücke 29 an ihrem unteren Ende in Umfangsrichtung durch einen Ring 65 miteinander verbunden, der an seinem den Anschlagstücken 29 abgewandten Rand Zungen 66 trägt, die auf die vordere Stirnfläche des Stellrings 9 umgebogen sind. Im Ausführungsbeispiel nach den Fig. 9 bis 11 durchsetzen die Anschlagstücke 29 in der Wand des Stellrings 9 vorgesehene Schlitze, die in Umfangsrichtung längs eines Kreisbogens verlaufen und die Aussparungen 30 bilden. Die Fig. 5 bis 8 zeigen ein weiteres Ausführungsbeispiel eines Bohrfutters mit axialer Führung des Stellrings 9 allein am Zwischenring 18. Dazu sind die Anschlagstücke 29 als radial einwärts gerichtete Nocken an der Wandinnenseite des Stellrings 9 und die Aussparungen 30 als Fenster in einem sich axial nach vorn konisch verjüngenden Kragen 69 des Zwischenrings 18 ausgebildet. Die radial innen liegende Fläche 29' der Nocken 29 besitzt einen Abstand von der Futterachse 3, der mindestens gleich dem größten Außendurchmesser 80' des Fensterrands 80 am Zwischenring 18 ist, so daß die die Anschlagstücke 29 bildenden Nocken das Aufschieben des Stellrings 9 auf den Zwischenring 18 nicht behindern. Die Nocken 29 tragen jeweils eine radial federnde Rastnase 81, die bei auf den Zwischenring 18 vollständig aufgeschobenem Stellring 9 hinter dem axial vorderen Rand 80 des Fensters 30 einrastet und dadurch die Spannhülse 9 gegen Verschieben axial nach vorn sichert, wie dies im einzelnen aus Fig. 8 ersichtlich ist.

Der Federbügel 38 bildet in allen Ausführungsbeispielen einen sich in Umfangsrichtung erstreckenden Federarm 36, der am freien Armende das Sperrglied 12 aufweist. Im eingerückten Zustand des Sperrglieds 12 liegt der Federarm 36 an der Steuerkurve 35 in einem Abstand vom Sperrglied 12 an, der das Durchfedern des Federarms 35 an der Stelle des Sperrglieds 12 um mindestens dessen Eingriffstiefe in die Sperrausnehmungen 10 ermöglicht, so daß beim Festziehen des Futters das Sperrglied 12 über den Kranz der Sperrausnehmungen 10 hinwegrutschen kann. Am Federbügel 38 sind zwei in Umfangsrichtung in gegenseitigem Abstand befindliche Vorsprünge 38', 38" vorgesehen. Von diesen bildet der sperrgliedseitige Vorsprung 38' die Anlage des Federarms 36 an der Steuerkurve 35, der andere Vorsprung 38" das Rastglied der Rasteinrichtung 17. Der Federbügel 38 ist durch ein Federband und das Sperrglied 12 unmittelbar durch das rückwärtige Ende des Federbands gebildet, gesehen in der dem Schließen des Bohrfutters entsprechenden Drehrichtung des Spannrings 8 (Pfeil 15). Die Vorsprünge 38', 38" sind jeweils in Form von Auswölbungen an das Federband angebogen.

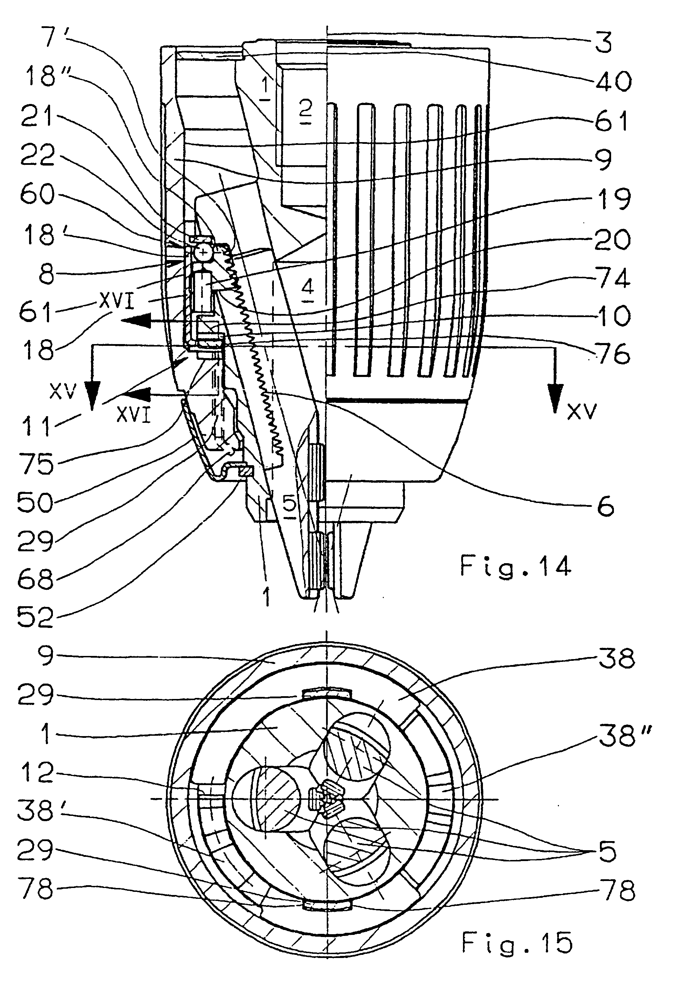

In den Ausführungsbeispielen nach den Fig. 14 bis 18 ist der Federbügel 38 in einem zwischen dem Spannring 8 und dem Stellring 9 in Umfangsrichtung verlaufenden Schlitz 94 angeordnet und am Spannring 8 formschlüssig gegen Verdrehen in noch näher zu beschreibender Weise gesichert. Die Ringwand des Spannrings 8 ist mit einem Fenster 77 für den Durchtritt des Sperrglieds 12 in die Sperrausnehmungen 10 versehen. Außerdem bildet der Schlitz 94 im Bereich des Rastgliedes 38" eine die Rastverstellungen des Rastgliedes ermöglichende Erweiterung 95. Im Ausführungsbeispiel nach den Fig. 14 bis 16 liegt der Federbügel 38 mit zur Futterachse 3 radialer Ausrichtung der Federbandfläche im Schlitz 94 und die Sperrausnehmungen 10 verlaufen entsprechend radial an einer futterkörperseitigen, zur Futterachse 3 senkrecht stehenden Ringfläche 74. Die Wand des Zwischenrings 18 bildet eine radial gerichtete Ringscheibe 76, die axial zwischen der die Sperrausnehmungen 10 aufweisenden Ringfläche 74 und einer radialen Ringschulter 75 des Stellrings 9 liegt. Zwischen der Ringscheibe 76 und der Ringschulter 75 befindet sich der den Federbügel 38 aufnehmende Schlitz 94. Die Steuerkurve 35 sowie die Rastaufnahme 17" sind an der Ringschulter 75 ausgebildet, das Fenster für den Durchtritt des Sperrglieds 12 und die Schlitzerweiterung 95 für das Rastglied 38" an der Ringscheibe 76. Der Zwischenring 18 durchsetzt mit seinen Anschlagstücken 29 den Federbügel 38 in Öffnungen, deren Ränder 78 in Umfangsrichtung den Anschlagstücken 29 anliegen, so daß sich der Federbügel 38 nicht gegenüber dem Zwischenring 18 und damit dem Spannring 8 verdrehen kann.

Bei den Ausführungsformen nach den Fig. 1 bis 13 liegt der mit seiner Federbandfläche parallel zur Futterachse 3 ausgerichtete Federbügel 38 in einem in Umfangsrichtung zwischen dem Futterkörper 1 und dem Zwischenring 18 verlaufenden Ringschlitz 83, der futterkörperseitig vom Kranz der axial verlaufenden Sperrausnehmungen 10 begrenzt ist. Der Federbügel 38 liegt mit auswärts gerichteter Vorspannung dem Zwischenring 18 an und durchgreift mit seinen beiden Vorsprüngen 38', 38" den Zwischenring 18 in Fenstern 39', 39" radial nach außen. Die diese Fenster 39', 39" durchgreifenden Vorsprünge 38', 38" sichern den Federbügel 38 durch Anschlag an den die Fenster in Umfangsrichtung begrenzenden Fensterrändern gegen Verdrehen relativ zum Zwischenring 18. Die radiale Breite des Ringschlitzes 83 ist größer als die entsprechende Dicke des Federbügels 38, der mit einem etwa mittig zwischen den beiden Vorsprüngen 38', 38" befindlichen Scheitelbereich 31 radial nach außen am Zwischenring 18 abgestützt ist und zwischen diesem Scheitelbereich 31 und den beiden Vorsprüngen 38', 38" je einen Federsteg 34 zur tangentialen Anlage am Kranz der Sperrausnehmungen 10 bildet. Durch die Vorspannung des Federbügels 38 wird das Sperrglied 12 außer Eingriff an den Sperrausnehmungen 10 gehalten; im Sperrzustand muß es über die Steuerkurve 35 in die Sperrausnehmungen 10 hineingedrückt werden. Jedenfalls beim Sperreingriff des Sperrglieds 12 in die Sperrausnehmungen 10 liegen beide Federstege 34 federnd am Kranz der Sperrausnehmungen 10 an, so daß sich der Federbügel 38 in seiner Lage im Ringschlitz 83 selbsttätig justiert. In diesem Sinne günstig erweist sich auch ein Federschenkel 71, den der Federbügel 38 mit seinem dem Vorsprung 38" abgewandten Ende bildet und der ebenfalls unter Vorspannung dem Kranz der Sperrausnehmungen 10 anliegt. Die dem Futterkörper 1 anliegenden beiden Federstege 34 und der Federschenkel 71 üben im übrigen eine Bremswirkung aus, durch die beim Bohrbetrieb auftretende Vibrationen an Futterkörper 1, Spannring 8 bzw. Zwischenring 18 und Stellring 9 gedämpft werden.

Die beiden Vorsprünge 38', 38" liegen sich in Bezug auf die Futterachse 3 etwa diametral gegenüber. Im Ausführungsbeispiel nach den Fig. 9 bis 11 besitzt der Federbügel 38 im Scheitelbereich zwischen seinen beiden Vorsprüngen 38', 38" einen dritten, den Zwischenring 18 in einem weiteren Fenster 39''' nach außen durchgreifenden Vorsprung 38'''. Dieser Vorsprung 38''' greift in einer auf der Wandinnenseite des Stellrings 9 vorgesehene Nut 70, die sich in Umfangsrichtung mindestens über den maximal möglichen Verdrehungsweg des Stellrings 9 gegenüber dem Spannring 8 erstreckt. Diese Nut 70 bildet mit ihren beiden Seitenwänden eine axiale Anlage für den Vorsprung 38''', wodurch der Stellring 9 gegen Axialverschiebungen am Spannring 8 gesichert ist, so daß in diesem Fall auch auf die Ringschulter 63 verzichtet werden könnte. Eine vergleichbare axiale Führungsfunktion empfiehlt sich für die beiden Vorsprünge 38', 38" jedoch nicht, da hier die Anlage des Federbügels 38 an den Seitenwänden entsprechender Nuten die für den Sperrvorgang bzw. Rastvorgang erforderliche Beweglichkeit der beiden Vorsprünge 38', 38" beeinträchtigen könnte.

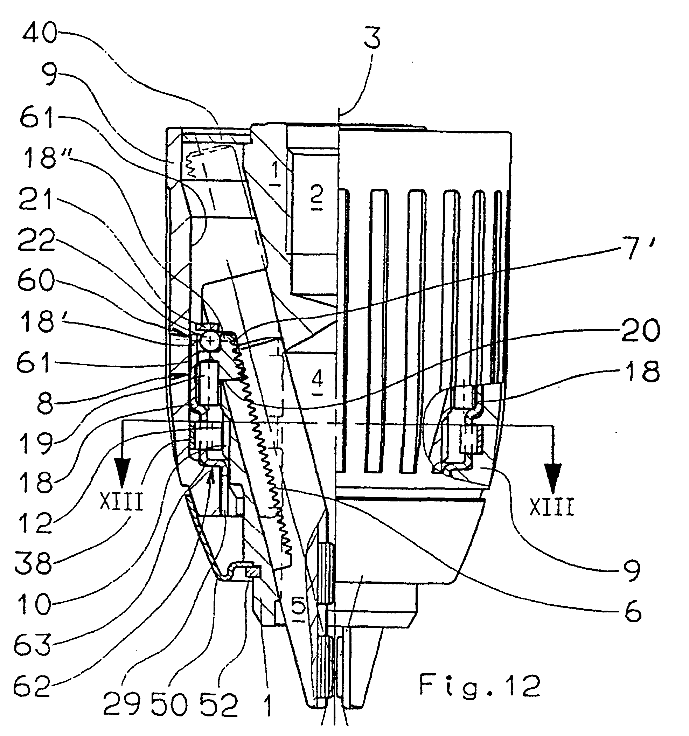

Im Ausführungsbeispiel nach den Fig. 12 bis 13 ist anstelle der durch den mittleren Vorsprung 38''' des Federbügels 38 bewirkten Axialführung des Stellrings 9 am Zwischenring 18 eine vom Federbügel 38 unabhängige Federspange 72 vorgesehen, die sich am Zwischenring 18 an einer in Umfangsrichtung zwischen den Vorsprüngen 38', 38" und, in Bezug auf die Futterachse 3, etwa diametral gegenüber dem Scheitelbereich 31 befindet. Die Federspange 72 greift ebenfalls radial nach außen in eine auf der Wandinnenseite des Stellrings 9 vorgesehene Nut 73, die sich wie die Nut 70 in Umfangsrichtung mindestens über den maximal möglichen Verdrehungsweg des Stellrings 9 gegenüber dem Zwischenring 18 erstreckt und die mit ihren Seitenwänden ebenfalls eine axiale Anlage für die Federspange 72 bildet, wodurch die Federspange 72 in gleicher Weise wie der mittlere Vorsprung 38''' eine Sicherung des Stellrings 9 gegen Axialverschiebungen am Zwischenring 18 ergibt.

In den Ausführungsbeispielen nach den Fig. 1 bis 18 sind die Anschläge 16', 16", die Sperreinrichtung 11 und die Rasteinrichtung 17 axial vor dem Spanngewinde 7' angeordnet. Selbstverständlich liegt es im Rahmen der Erfindung, diese Teile, zumindest einige davon, axial hinter dem Spanngewinde 7' vorzusehen, wobei sich insbesondere der körperfeste Druckring 21 dazu anbietet, mit den Sperrausnehmungen 10 versehen zu werden.

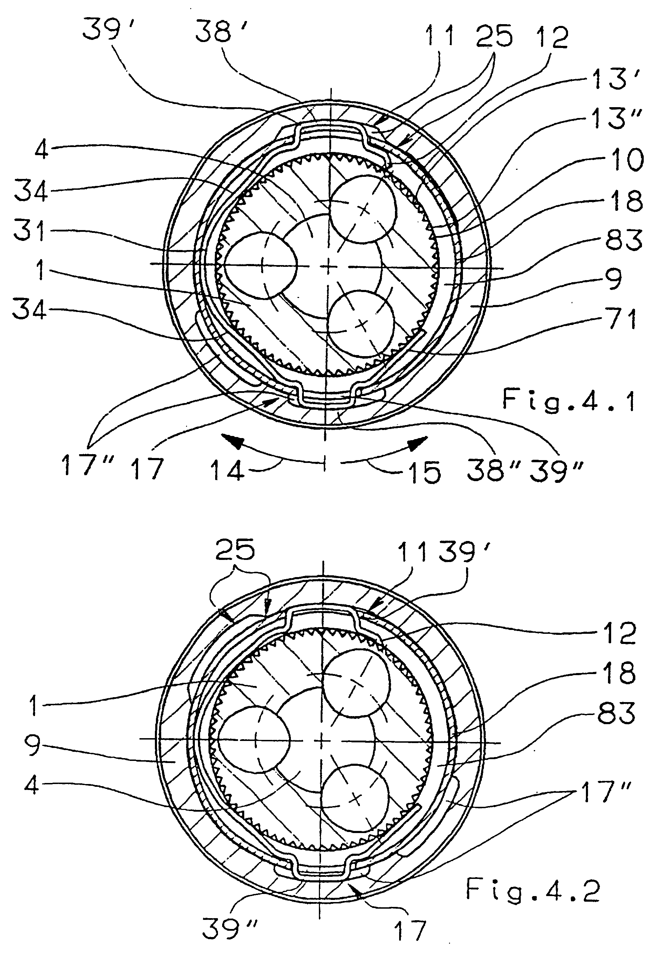

Im folgenden wird die Funktionsweise des erfindungsgemäßen Bohrfutters anhand des Ausführungsbeispiels nach den Fig. 1 bis 4.1, 4.2 kurz erläutert:

Die Fig. 1 bis 4.1 zeigen das Bohrfutter im ungesperrten Zustand. Der Federarm 36 ist radial nach außen verstellt, so daß das Sperrglied 12 außerhalb der Sperrausnehmungen 10 steht. Der in die Rastausnehmung 17" greifende Rastvorsprung 38" sichert den Zwischenring 18 und den Stellring 9 gegen Verdrehungen gegeneinander, so daß beim Drehen des Stellrings 9 über den Zwischenring 18 der Spannring 8 relativ zum Futterkörper 1 frei verdreht werden kann, solange das Bohrfutter offen ist. Befindet sich in der Werkzeugaufnahme 4 des Bohrfutters ein Bohrerschaft und wird der Stellring 9 in Richtung des Pfeils 15, also im Sinne eines Schließens des Futters verdreht, erfolgt zunächst eine Mitnahme des Spannrings 8 in der schon beschriebenen Weise, bis die Spannbacken 5 am Werkzeugschaft zur Anlage kommen. Eine weitere Mitnahme des Spannrings 8 durch den Stellring 9 ist dann nicht mehr möglich, so daß sich der Stellring 9 unter Überwindung der Rasteinrichtung 17 in die in Fig. 4.2 gezeigte Stellung gegenüber dem Zwischenring 18 verstellt. In dieser Stellung drückt der Stellring 9 über die Steuerkurve 35 den Federarm 36 radial nach innen und damit das Sperrglied 12 in den eingerückten Zustand an den Sperrausnehmungen 10. Damit ist der Spannring 8 gegenüber dem Futterkörper 1 gegen ein Verdrehen in Richtung des Pfeils 14 und damit gegen ein unerwünschtes Öffnen des Bohrfutters gesichert. Jedoch kann das Bohrfutter weiter und fester gespannt, nämlich der Stellring 9 relativ zum Futterkörper 1 in Richtung des Pfeiles 15 verdreht werden, wobei nun der Stellring 9 über die Anschläge 16" den Zwischenring 18 und damit den Spannring 8 in Richtung des Pfeiles 15 festzieht. - Zum Lösen und Öffnen des gespannten Futters (Fig. 4.2) wird zunächst der Stellring 9 in Richtung des Pfeiles 14 verdreht, wobei zunächst wieder die Rasteinrichtung 17 verstellt wird und sich die Anschlagstücke 29 in den Aussparungen 30 wieder in den aus Fig. 4.1 ersichtlichen Zustand verstellen und gleichzeitig die Steuerkurve 35 den Federarm 36 freigibt, so daß sich der Federarm 36 aufgrund seiner Vorspannung radial nach außen verstellen kann, bis das Sperrglied 12 aus den Sperrausnehmungen 10 ausgetreten ist. Beim weiteren Drehen des Stellrings 9 wird über die Anschläge 16' der Spannring 18 mitgenommen, wodurch das Bohrfutter gelöst und geöffnet wird. - Im Ergebnis ist zur Handhabung des erfindungsgemäßen Bohrfutters nur die drehende Betätigung des Stellrings 9 gegenüber dem Futterkörper erforderlich, was nur eine Hand erfordert, wenn der Futterkörper 1 über die Bohrspindel gehalten oder umgekehrt der Stellring 9 von Hand festgehalten und der Futterkörper 1 durch die Bohrspindel gedreht wird. Der Stellring 9 kann sich daher axial über praktisch die ganze Länge des Bohrfutters bis zum axial hinteren Futterende erstrecken und dabei die einzige von außen der Hand zugängliche Futterhandhabe bilden, wie es im Ausführungsbeispiel nach den Fig. 1 bis 18 der Fall ist. Nur wenn dennoch gewünscht wird, den Futterkörper 1 auch unabhängig von der Bohrspindel manipulieren zu können, empfiehlt es sich, den Abschlußring 40 in Form eines Halterings für den Futterkörper 1 auszubilden, wobei dann der Abschlußring 40 drehfest mit dem Futterkörper verbunden sein muß, was aber in den Ausführungsbeispielen nach den Fig. 1 bis 18 im einzelnen nicht weiter erläutert ist. Ein solcher Haltering 54 kann aber auch einstückig mit dem Futterkörper 1 ausgebildet sein.

## Patentansprüche

1. Bohrfutter, insbesondere zum Schlagbohren, mit einem an eine Bohrspindel anschließbaren Futterkörper (1), mit zwischen sich eine Aufnahme (4) für das Bohrwerkzeug bildenden, im Futterkörper (1) geführten Spannbacken (5), die zum Öffnen und Schließen des Bohrfutters durch einen am Futterkörper (1) drehbar und axial unverschiebbar geführten Spannring (8) mit einem an den Spannbacken (5) im Eingriff stehenden Spanngewinde (7') verstellbar sind, ferner mit einer mittels mindestens eines mit einer Sperrfeder zusammenwirkenden Sperrgliedes (12) unerwünschte Verstellungen der Spannbacken (5) verhindernden Sperreinrichtung (11) zur Fixierung der Drehstellung des Spannrings (8) gegenüber dem Futterkörper (1), weiter mit einem zwischen Anschlägen (16', 16") begrenzt verdrehbaren koaxialen Stellring (9), durch dessen Verdrehen das Sperrglied (12) verstellbar ist, und mit einer selbstätige und unerwünschte Drehungen des Stellrings (9) gegenüber dem Spannring (8) verhindernden Rasteinrichtung (17) mit einem von der Kraft einer Rastfeder beaufschlagten Rastglied (38''), wobei die Anschläge (16', 16") für den Stellring (9) dessen Verdrehung in beiden Drehrichtungen gegenüber dem Spannring (8) begrenzen, wobei durch Verdrehen des Stellrings (9) relativ zum Spannring (8) das Sperrglied (12) sich verstellt, und daß die Sperreinrichtung (11) einen koaxialen Kranz von Sperrausnehmungen (10) aufweist, **dadurch gekennzeichnet, daß** zur Ausbildung der Anschläge (16',16") mindestens ein Anschlagstück (29) am Stellring (9) und eine das Anschlagstück (29) aufnehmende Aussparung (30) am Spannring (8) vorgesehen ist, daß das Sperrglied (12) am Spannring (8) angeordnet und zur Steuerung des Sperrglieds (12) eine Steuerkurve (35) am Stellring (9) ausgebildet ist, wobei ein den Spannring (8) axial nach hinten am Futterkörper (1) abstützender Druckring (21) mit den Sperrausnehmungen (10) versehen ist.

2. Bohrfutter nach Anspruch 1, **dadurch gekennzeichnet, daß** das eingerückte Sperrglied (12) den Sperrausnehmungen (10) in einander derart geneigten Flankenflächen (13', 13'') anliegt, daß diese den Spannring (8) in der dem Öffnen des Bohrfutters entsprechenden Drehrichtung gegen Verdrehen sperren, beim Verdrehen des Spannrings (8) in der entgegen gesetzten, also dem Schließen des Bohrfutters entsprechenden Drehrichtung aber das Sperrglied (12) gegen die Kraft der Sperrfeder aus den Sperrausnehmungen (10) herausdrücken und dadurch von Sperrausnehmung (10) zu Sperrausnehmung (10) verrutschen lassen.

3. Bohrfutter nach Anspruch 1 oder 2, **dadurch gekennzeichnet, daß** die Rasteinrichtung (17) zwei Raststellungen für den Stellring (9) bildet, wobei sich das Sperrglied (12) in der einen Raststellung in dem an den Sperrausnehmungen (10) eingerückten Zustand, in der anderen Raststellung im ausgerückten Zustand befindet und die Raststellungen durch den Eingriff des von der Kraft der Rastfeder beaufschlagten Rastglieds (38'') in entsprechend angeordnete Rastaufnahmen (17'') gebildet sind.

4. Bohrfutter nach Anspruch 3, **dadurch gekennzeichnet, daß** das Rastglied (38'') am Spannring (8) und die Rastaufnahmen am Stellring (9) vorgesehen sind.

5. Bohrfutter nach einem der Ansprüche 1 bis 4, **dadurch gekennzeichnet, daß** der Spannring (8) einen koaxialen Zwischenring (18) aufweist, der die spannringseitigen Teile der Anschläge (16', 16") für den Stellring (9) und den Federbügel (38) trägt und ein Kragenteil (18') aufweist, der den das Spanngewinde (7') tragenden Teil des Spannrings (8) drehfest umschließt.

6. Bohrfutter nach einem der Ansprüche 1 bis 5, **dadurch gekennzeichnet, daß** das Anschlagstück (29) an den Enden des Drehweges jeweils mit einer der die Aussparung (30) in Umfangsrichtung begrenzenden beiden Stirnflächen zum Anschlag kommt.

7. Bohrfutter nach einem der Ansprüche 1 bis 6, **dadurch gekennzeichnet, daß** das Anschlagstück (29) als radial einwärts gerichteter Nocken an der Wandinnenseite des Stellrings (9) ausgebildet ist.

## Claims

1. Drill chuck, in particular for percussive drilling, with a chuck body (1) that can be connected to a drill spindle, with between it a receiver (4) for clamping jaws (5) which form the drill tool and are held in the chuck body (1) and which, for the purposes of opening and closing the drill chuck, can be adjusted by means of a straining ring (8), which is held rotatably and axially immovable on the chuck body (1), with a tightening screw thread (7') that is engaged on the clamping jaws (5); furthermore with a blocking device (11) which, by means of at least one blocking element (12) that interacts with a retaining spring, prevents unwanted displacement of the clamping jaws (5), for fixing the rotational position of the straining ring (8) relative to the chuck body (1); furthermore with a coaxial adjusting ring (9) which can be rotated to a limited extent between limit stops (16', 16"), through which rotation the blocking element (12) can be adjusted; and with a snap-in device ( 17) which prevents automatic and unwanted rotation of the adjusting ring (9) relative to the straining ring (8), with a snap-in element (38") that is subject to the force of a detent spring, wherein the limit stops (16', 16") for the adjusting ring (9) limit the latter's rotation in both rotational directions relative to the straining ring (8),
wherein the blocking element (12) is adjusted through rotation of the adjusting ring (9) relative to the straining ring (8), and that the blocking device (11) has a coaxial collar of blocking recesses (10),
**characterised in that**
to form the limit stops (16', 16"), at least one limit stop piece (29) is provided on the adjusting ring (9) and a recess (30) that accommodates the limit stop piece (29) is provided on the straining ring (8), that the blocking element (12) is arranged on the straining ring (8), and to control the blocking element (12) a radial cam (35) is formed on the adjusting ring (9),
wherein a thrust collar (21) which supports the straining ring (8) axially to the rear on the chuck body (1) is equipped with the blocking recesses (10).

2. Drill chuck in accordance with claim 1, **characterised in that** engaged blocking element (12) rests against the blocking recesses (10) in flank faces (13', 13") that are inclined into one another in such a way that these block the straining ring (8) in the direction of rotation that corresponds to opening of the drill chuck, but when the straining ring (8) is rotated in the opposite direction, i.e. corresponding to closing of the drill chuck, they push the blocking element (12) against the force of the retaining spring, out of the blocking recesses (10), and thereby allow it to slip from blocking recess (10) to blocking recess (10).

3. Drill chuck in accordance with claim 1 or 2, **characterised in that** the snap-in device (17) forms two lock-in positions for the adjusting ring (9), wherein in the one lock-in position the blocking element (12) is located in the state engaged on the blocking recesses (10), and in the other lock-in position it is in the disengaged state, and the lock-in positions are formed by the engagement of the snap-in element (38") that is subjected to the force of the detent spring into catch receivers (17") that are arranged accordingly.

4. Drill chuck in accordance with claim 3, **characterised in that** the snap-in element (38") is provided on the straining ring (8) and the catch receivers are arranged on the adjusting ring (9).

5. Drill chuck in accordance with one of the claims 1 to 4, **characterised in that** the straining ring (8) has a coaxial intermediate ring (18) which carries the straining ring parts of the limit stops (16', 16") for the adjusting ring (9) and the spring clip (38), and has a collar part (18') which, in a rotation-proof manner, encloses that part of the straining ring (8) which bears the tightening screw thread (7').

6. Drill chuck in accordance with one of the claims 1 to 5, **characterised in that** at the ends of the rotational path, the limit stop piece (29) in each case comes to a stop against one of the two frontal faces that delimit the recess (30) in the circumferential direction.

7. Drill chuck in accordance with one of the claims 1 to 6, **characterised in that** the limit stop piece (29) is designed as a cam, directed radially inwards, on the wall inner face of the adjusting ring (9).

## Revendications

1. Mandrin porte-foret, en particulier pour le perçage à percussion, comprenant un corps de mandrin (1) pouvant être fixé à une broche de perçage, des mors de serrage (5), guidés dans le corps de mandrin (1), qui forment entre eux un logement (4), destiné à recevoir l'outil de perçage, et, pour ouvrir et fermer le mandrin porte-foret, peuvent être déplacés par une bague de serrage (8), guidée en rotation sur le corps de mandrin (1), mais fixe dans la direction axiale, et comportant un filetage de serrage (7') coopérant avec les mors de serrage (5), comprenant en outre un dispositif de verrouillage (11) empêchant, à l'aide d'au moins un organe de verrouillage (12) coopérant avec un ressort de verrouillage, des déplacements non souhaités des mors de serrage (5), et destiné à bloquer la position angulaire de la bague de serrage (8) par rapport au corps de mandrin (1), comprenant d'autre part une bague de réglage (9) coaxiale, pouvant être tournée de manière limitée entre des butées (16', 16") et dont la rotation permet de déplacer l'organe de verrouillage (12), et comprenant un dispositif d'encliquetage (17) empêchant des rotations spontanées et non souhaitées de la bague de réglage (9) par rapport à la bague de serrage (8) et comportant un organe d'encliquetage (38") pouvant être sollicité par la force d'un ressort d'encliquetage, les butées (16', 16") pour la bague de réglage (9) délimitant la rotation de celle-ci dans les deux sens de rotation par rapport à la bague de serrage (8), la rotation de la bague de réglage (9) par rapport à la bague de serrage (8) ayant pour effet de déplacer l'organe de verrouillage (12), et le dispositif de verrouillage (11) présentant une couronne coaxiale d'échancrures de verrouillage (10), **caractérisé en ce que**, pour réaliser les butées (16', 16"), au moins une pièce formant butée (29) est prévue sur la bague de réglage (9) et un évidement (30), recevant cette pièce formant butée (29), est prévu sur la bague de serrage (8), **en ce que** l'organe de verrouillage (12) est disposé sur la bague de serrage (8) et, pour commander l'organe de verrouillage (12), une came de commande (35) est aménagée sur la bague de réglage (9), une bague de pression (21), soutenant la bague de serrage (8) axialement vers l'arrière sur le corps de mandrin (1), étant pourvue des échancrures de verrouillage (10).

2. Mandrin porte-foret selon la revendication 1, **caractérisé en ce que** l'organe de verrouillage (12) engagé est appliqué contre les échancrures de verrouillage (10), au niveau de surfaces de flanc (13', 13") inclinées de manière telle qu'elles bloquent la bague de serrage (8) en rotation dans le sens correspondant à l'ouverture du mandrin porte-foret mais, lors de la rotation de la bague de serrage (8) dans le sens opposé, c'est-à-dire correspondant à la fermeture du mandrin, repoussent l'organe de verrouillage (12) hors des échancrures de verrouillage (10), à l'encontre de la force du ressort de verrouillage, et le font ainsi glisser d'échancrure (10) en échancrure (10).

3. Mandrin porte-foret selon la revendication 1 ou 2, **caractérisé en ce que** le dispositif de verrouillage (17) offre deux positions d'encliquetage pour la bague de réglage (9), l'organe de verrouillage (12), dans l'une des positions d'encliquetage, se trouvant dans la position engagée dans les échancrures de verrouillage (10) et, dans l'autre position d'encliquetage, se trouvant dans la position dégagée, les positions d'encliquetage étant obtenues par engagement de l'organe de verrouillage (38"), sollicité par le ressort d'encliquetage, dans des échancrures d'encliquetage (17") disposées en conséquence.

4. Mandrin porte-foret selon la revendication 3, **caractérisé en ce que** l'organe d'encliquetage (38") est prévu sur la bague de serrage (8) et les échancrures d'encliquetage sur la bague de réglage (9).

5. Mandrin porte-foret selon l'une des revendications 1 à 4, **caractérisé en ce que** la bague de serrage (8) présente une bague intermédiaire (18) coaxiale qui porte les parties côté bague de serrage des butées (16', 16") pour la bague de réglage (9) et le ressort en étrier (38) et présente une partie formant collet (18') qui entoure de manière fixe en rotation la partie de la bague de serrage (8) portant le filetage de serrage (7').

6. Mandrin porte-foret selon l'une des revendications 1 à 5, **caractérisé en ce que** la pièce de butée (29), aux extrémités de la course de rotation, entre en contact respectivement avec l'une des deux faces frontales qui délimitent l'évidement (30) dans la direction périphérique.

7. Mandrin porte-foret selon l'une des revendications 1 à 6, **caractérisé en ce que** la pièce de butée (29) est réalisée sur la face intérieure de la paroi de la bague de réglage (9), sous la forme d'une came orientée radialement vers l'intérieur.
